# EUROPEAN PATENT SPECIFICATION

(11) **EP 2 352 002 B1**
(45) Date of publication and mention of the grant of the patent: **30.10.2013**
(21) Application number: 10152163.1
(22) Date of filing: 29.01.2010
(51) Int. Cl.: G01M 3/00, G01M 3/24, F17D 5/06

(54) **A system for remote leak detection and/or path tracking for underground fluid transportation pipelines**
System zur entfernten Leckdetektion und/oder Pfadverfolgung für unterirdische Rohrleitungen zum Flüssigkeitstransport
Système pour la détection de fuites à distance et/ou pour le suivi du parcours de conduites souterraines de transport de liquides

(43) Date of publication of application: 03.08.2011
(73) Proprietor: POLITECNICO DI TORINO, 10129 Torino (IT); QATAR UNIVERSITY QSTP-B, Doha (QA)
(72) Inventor: Trinchero, Daniele, I-10129, TORINO (IT); Stefanelli, Riccardo, I-10129, TORINO (IT); Kadri, Abdullah, Doha (QA); Abu-Dayya, Adnan, Doha (QA); Khattab, Tamer, Doha (QA); Hasna, Mazen, Doha (QA)
(74) Representative: Quinterno, Giuseppe

(56) References cited:
- WO-A2-99/25070
- WO-A2-2004/059274
- FR-A1- 2 556 832
- FR-A1- 2 930 337
- GB-A- 2 227 805
- GB-A- 2 457 661
- US-A- 3 691 819
- US-A1- 2004 261 547
- US-B1- 6 600 458

## Description

The present invention relates to a system for remote leak detection in a fluid transportation pipeline, of the kind defined in the preamble of claim 1.

The invention relates in particular (though not exclusively) to a system for detecting leakages in water transportation conduits.

Water represents a primary necessity for everybody's ordinary life and for an effective accomplishment of many industrial processes. In the most remote and isolated regions, as well as in the most urbanized areas, water supplying to domestic premises represents a fundamental living necessity. At the same time, lack of water may prevent the development of business activities from handicraft manufacturing to goods transformation and energy production.

Water demand is expanding continuously, as a direct consequence of the growth of the earth population, but water resources are facing a problematical and constant decrease, caused by global warming and climate changes. Unlike other more peculiar phenomena, water availability decrease is common to developing and developed Countries.

While the protection and improvement of water resources is a complex process depending on political long-term strategies, water distribution can be enhanced, from an engineering point of view, mainly by limiting the water waste that occurs along the path of pipelines, between the source and the end-users. Depending on the age and maintenance of the conduits the percentage of lost ("unaccounted") water can range up to 70%; a percentage of less than 20% is generally not even considered a leak, and restorations are considered as mandatory only when the leak percentage exceeds 50%.

The restoration of damaged pipelines is a complex task, since water pipelines are typically interred in the ground, and quite often their path is not known with a sufficient precision.

Since such pipelines are not directly accessible, the identification of leakages is not an obvious matter, and the only information obtainable is an approximate localization between two subsequent accessible gate valves, bifurcations, or pressure monitoring points. Without using advanced monitoring technology, the problem of identifying and localizing leakages may be solved by carrying out expensive excavations, over the full pipeline path, until the exact position of a leak is identified. Services interruption is an ancillary drawback and it should be avoided or limited only to the time needed for restoration or replacement.

Despite the fact that pipeline breaks represent a huge dispersion of primary resources for companies and the social community, renovations are complex and require long times in order to significantly decrease water wasting.

For all these reasons, in the last decades many efforts have been devoted to developing monitoring techniques for the identification of unknown pipeline paths and for a fine identification and localization of breaks and leakages. Several leakage localization techniques have been proposed, such as the use of tracer gases. Gas tracing makes use of a special gas mixture that is introduced into a conduit, replacing the fluid normally transported therein. The tracing gas is subsequently investigated from the exterior, by using special instruments able to detect the concentration of the gas in the environment. Such systems require service interruption and are very expensive.

Other techniques are based on the use of ground penetrating radars (GPRs), which may allow an easy estimation of unknown pipeline paths, but cannot provide a comprehensive monitoring of small pipe damages.

Other techniques make use of pressure or vibration sensors, able to detect either ground acoustic waves or pipelines vibrations, or liquid pressure variations, all generated by water losses. Such techniques are of critical application in urban environments, in which it is difficult to distinguish the acoustic noise produced by leakages from the high background acoustic noise.

US-3 691 819-A discloses a system for remote leak detection of the initially defined kind, comprising a self-propelled pig adapted to travel inside a pipeline, in contact with the wall thereof. The pig comprises a casing or envelope within which there are provided a sound wave detector, a signal processing stage and a radio transceiver for transmitting signals to a remote processing station. A loop antenna is arranged around the external surface of the casing.

WO-2004/659274-A2 discloses a leak detection module or "pill" adapted to be conveyed by the fluid flow in a pipeline. Acoustic data and position data are recorded in the module while the latter is travelling in the pipeline, but are downloaded and analyzed only after the module has been recovered from the pipeline. The position data are provided to the travelling module by low-frequency transmitters deployed at the pipeline wall at convenient positions along the pill run.

FR-2 930 337-A1 discloses a leak detection module which is adapted to be conveyed by the fluid flow in a pipeline, but is however permanently connected by a cable or tether to the point of introduction into the pipeline. Though radio signals are exchanged between the introduction point and the module to control the motion of the latter, or to send alarms from the module, the acoustic and position data recorded by the module are downloaded and analyzed only after the module has been recovered.

US-2004/0261547-A1 discloses a data-collecting apparatus comprising a pig travelling in a pipeline. The pig has cleaning seals which scrape the pipeline wall. The noise generated by the interaction of the pig with the pipeline wall is recorded for a later off-line analysis or, alternatively, is processed on-board the pig.

GB-2 457 661-A discloses a system for detecting defects in a pipeline, comprising a detection module or pipe tool to be connected to a pig which is run inside the pipeline. The pipe tool only serves to detect special marks provided along the pipeline and comprising each a respective RFID tag signaling its own position. The position data acquired by the towed detection module is recorded, either in the module itself or in the trailing pig.

US- 6 600 458 B1 discloses antenna arrangements with mutually orthogonal loops or frames, for operation at sub-high frequencies (about 1 kHz maximum), for collecting emissions from equipments used in underground facilities.

An object of the present invention is to provide an improved system for remote leak detection and/or path tracing for underground fluid transportation pipelines.

This and other objects are achieved according to the invention by a system whose salient features are defined in the annexed claim 1.

Advantageous embodiments of the system according to the present invention are defined in the dependent claims.

Further features and advantages of the present invention will become apparent from the following description, provided merely as a non-limiting exemplification, with reference to the accompanying drawings, wherein:
figure 1 is a schematic cross-sectional view showing one embodiment of a system according to the present invention;
figure 2 is a schematic perspective view showing one embodiment of a detection module or probe comprised in a system according to the present invention;
figure 3 is a schematic perspective view, showing the detection module or probe flowing in a pipeline;
figure 4 is a schematic perspective view relating to the first embodiment of the system according to the invention, shown in the preceding figures,
figure 5 is a schematic representation showing the architecture of a system according to the invention, comprising three main tiers,
figure 6 is a block diagram showing a possible structure of the detection module or first tier of the system according to the invention;
figure 7 is a representation showing a possible transmission timeline for a transmitter comprised in the detection module;
figure 8 is a block diagram showing a structure of a gateway station or second tier of the system shown in figure 5;
figure 9 is a block diagram showing a structure for a backend server station or third tier of system according to figure 5; and
figure 10 is a schematic perspective view showing an example of a detection module or probe (or first tier) of a system using a single antenna arrangement.

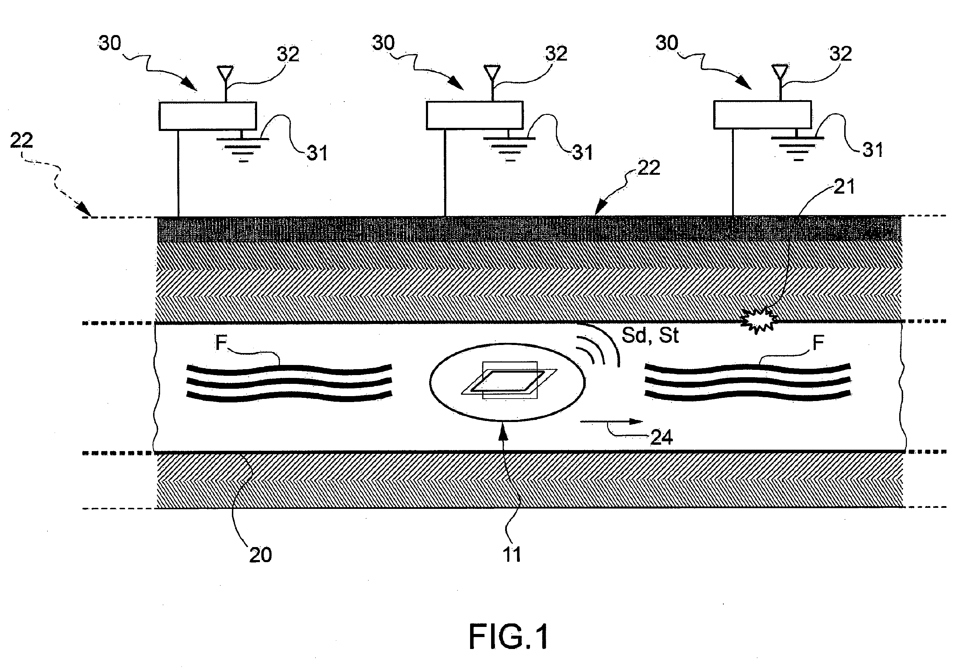

Figure 1 diagrammatically shows a system for identifying and localizing faults or breaks in a pipeline according to the present invention.

In figure 1 there is shown a pipeline 20, in particular a water pipeline interred under the ground surface 22, and having a break 21 through which part of the liquid flow F is leaking in the ground outside the pipeline.

A system according to the invention comprises a detection module, indicated as a whole by reference 11 in figure 1, which is introduced into the pipeline 20 and is adapted to be conveyed by the fluid flow F in said pipeline.

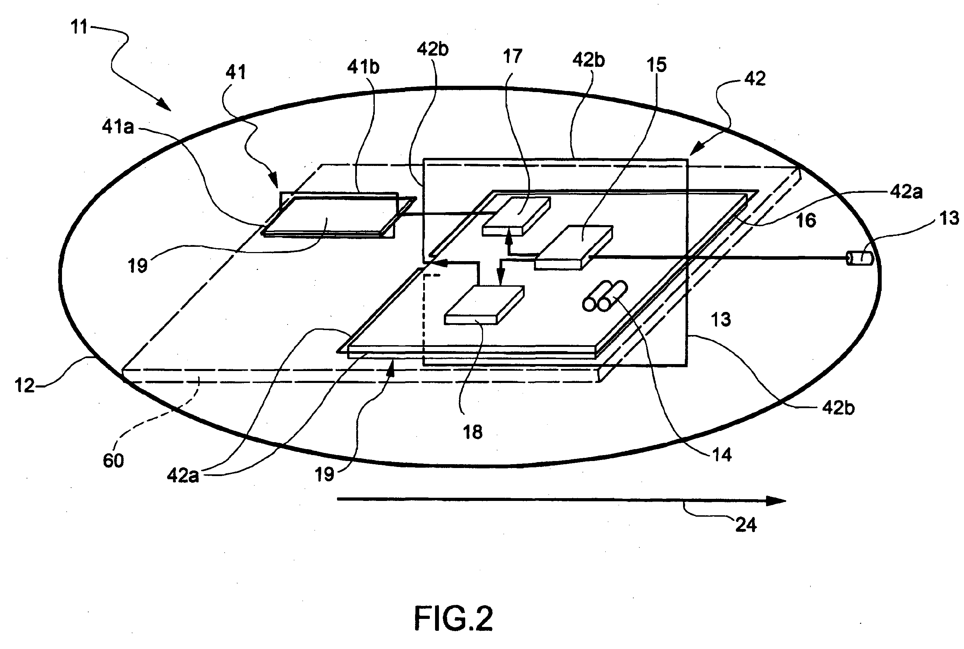

Referring in particular to figure 2, in the illustrated embodiment the fluid detection module or probe 11 comprises an outer envelope 12, which is made of a preferably rigid material, transparent to electromagnetic waves, such as a plastic material. The envelope 12 has preferably the shape of a solid of revolution, for example an ellipsoid, so that in use it tends to assume an orientation, within the liquid flow F, in which its major or longitudinal axis is essentially parallel to the traveling direction 24 of said flow.

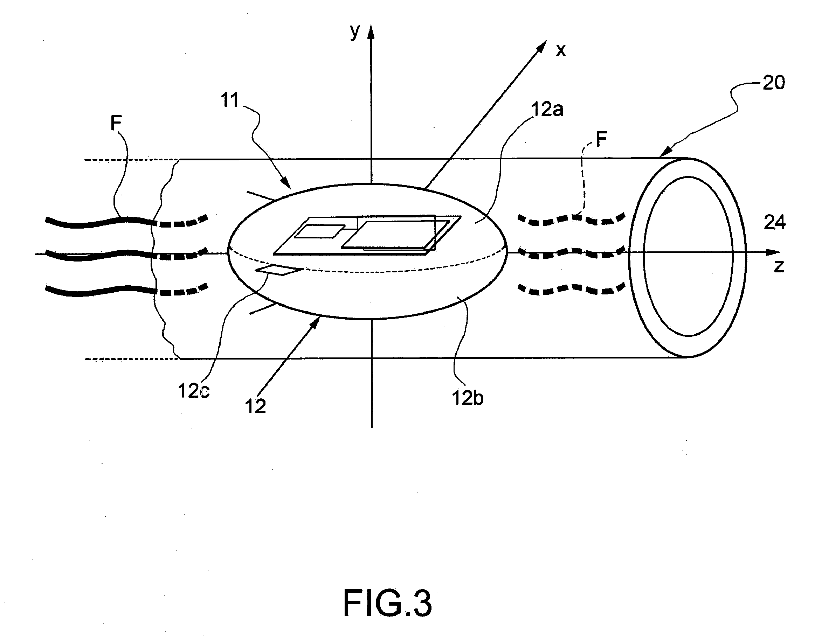

With reference to figure 3, in a possible embodiment, the envelope 12 is formed of two semi-ellipsoidal half-shells 12a and 12b, which are fastened in a watertight manner to one another, for instance by means of a silicon adhesive. The elongate shape of envelope 12 tends to prevent the detection module or probe 11 from rotating around its minor transverse axes, i.e. about the transverse axes x and y of the pipeline or conduit 20 (figure 3).

In the operation, however, the detection module or probe 11 can rotate about its longitudinal axis (which is coincident with or essentially parallel to the longitudinal axis z of the pipeline 20, figure 3), but in order to limit such a rotation and confer a certain stability to the displacement of said module, the envelope 12 may be provided with external stabilizing fins 12c, in particular in its rear portion.

In the embodiment specifically shown in figure 2, within the envelope 12 of the detection module 11, there is fixed a sensing device 13, capable of generating electric detection signals representative of (ultra)sound signals detected in the pipeline 20. The sensing device 12 is a per se known acoustic sensor, such as an omnidirectional microphone or a so-called hydrophone, and is preferably mounted in one longitudinal end portion of the envelope 12.

Sensing device 13 is connected to a signal processing and control unit 15, including at least one microprocessor, and associated memory devices.

In the embodiment specifically shown in figure 2, inside the envelope 12 of the detection module there are provided two wireless transceiver units, comprising respective transceiver circuits 17 and 18 and associated antenna arrangements 41 and 42.

The first wireless transceiver unit comprises transceiver circuits 17 and the antenna arrangement 41 and is a microwave transceiver unit, whereas the second unit includes the transceiver circuit 18 and the antenna arrangement 42 and is a radio-frequency unit.

The various circuits and devices inside envelope 12 can be supplied with the required d.c. voltages, by means of per se known batteries or accumulators 14.

The various above-described circuits and devices can be supported inside the envelope 12 for instance by means of at least one insulating support plate, such as the plate shown in phantom and indicated 60 in figure 2. Such a plate is made for instance of polymethylmetacrilate.

As an alternative, said circuits and components are carried by at least one support plate, which, together with said circuits and components, is arranged within a metal case (mild steel tin) 19 (figure 2). Such a metal case has preferably an essentially parallelepiped shape, with a strongly reduced height or thickness. Preferably, as it will be disclosed in more details in the following, the case 19 has main dimensions corresponding to those of the radio-frequency antenna arrangement 42.

As an alternative, the said circuits and components may be carried by two insulating support plates, arranged within respective metal cases (both indicated 19 in figure 2) having an essentially parallelepiped shape, with a reduced thickness or height and major dimensions corresponding to those of the associated antenna arrangements 41 and 42, as explained in the following.

In the embodiment according to figure 2, both antenna arrangements 41 and 42 are of the double, orthogonal polarization magnetic loop type, and comprise respective pairs of orthogonal loops or frames 41a, 41b and 42a, 42b. In the exemplary embodiment shown, the respective horizontal loops 41a, 42a extend around the lateral surface of the respective metal cases 19, whereas their other loops 41b and 42b extend orthogonally thereto, with their vertical sides adjacent the intermediate portion of the lateral surface of said metal cases.

The loops are not necessarily circular in shape: they can be for instance of polygonal or more complex shapes, including fractal shapes.

The use of two loop antennas polarized along orthogonal directions, both transverse with respect to the flow direction 24 of the fluid in the pipeline 20, allows to obtain maximum radiation of signals towards the surface 22 of the ground, independently from the rotation of the detection module 11 around said direction of flow. This essentially prevents the rotation of the detection module 11 from adversely affecting the quality of the transmissions between the detection module 11 and the ground wireless stations to be described later.

The double loop magnetic antennas allow, in other words, performing efficient space-diversity transmissions.

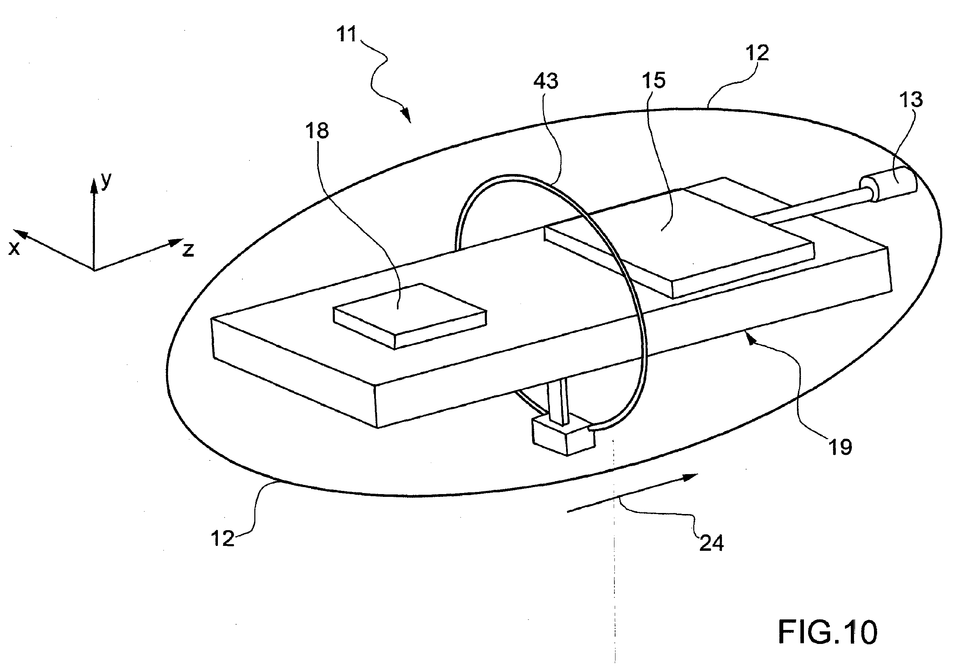

In an alternative embodiment, to be disclosed later in connection with figure 10, a single magnetic antenna arrangement, polarized along the flow direction of the liquid in the pipeline, is utilized.

The microwave transceiver unit 17, 41 can be designed for operating for instance in the band between 30 MHz and 6 GHz, or higher, utilizing any kind of transmission technique, utilizing either narrowband or wideband spread spectrum modulations (for example OFDM, DSSS, FHSS or GFSK).

The radiofrequency transceiver unit is designed for operating at a relative lower frequency, such as for instance 450 KHz.

Reverting now to figure 1, in the embodiment illustrated therein a system according to the present invention comprises further a plurality of receiving modules 30 on the ground surface 22. The receiving modules 30 can be fixed and/or movable; for operation in connection with a detection module such as that disclosed in figure 2, they comprise each a respective microwave antenna 31 and a respective radiofrequency antenna 32.

In the operation, the acoustic sensing device 13 of the detection module 11 conveyed by the fluid flow in the pipeline 20 provides the signal processing and control unit 15 with detection signals representative of the (ultra)sound waves detected in the pipeline. The unit 15 samples the signals provided by the detecting device 15, and stores the samples thereof in the associated memory devices. The signal processing and control unit 15 is arranged to analyze the sound detection signals provided by the sensor 13, and to send to the transceiver circuits 17 and 18 respective signals or data, representative of the sound waves detected in the pipeline. Through the associated antenna arrangements 41 and 42, said signals or data are transmitted, through microwave of radiofrequency waves, towards the ground stations or modules 30, which receive said data or signals by means of their respective antennas 31 and 32.

The ground stations or modules 30 can be provided with signal processing means, arranged to extract from the received data or signals information pertaining to the spectra of the acoustic signals captured by the sensing device 13, the analysis of said information allowing identifying the presence of a break and the corresponding leak in the pipeline 20.

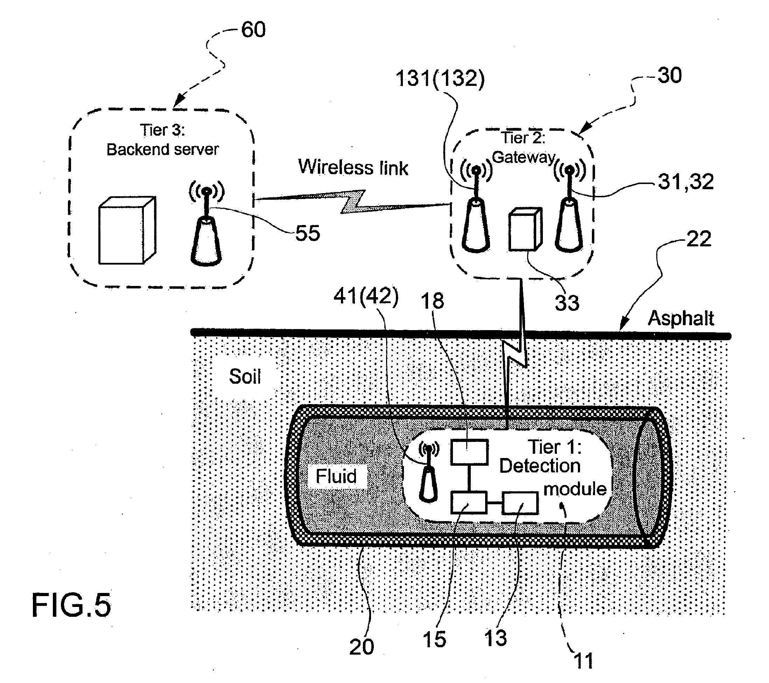

As it will be described later in connection with figure 5, the data or signals received at one or more ground stations 30 might be processed and analyzed not necessarily in said ground stations, but rather in a remote, backend server station 60 with which all ground stations 30 can communicate.

As already mentioned above, the at least one ground station 30 can be fixed to ground or can be movable with respect thereto and, in this latter case, such a station allows to follow, i.e. track, the displacement of the detection module inside the pipeline 20, thus permitting to reconstruct the path of the pipeline, if unknown or imprecisely known.

With reference to the specific embodiment shown in figure 2, the system can be arranged such that only the radio-frequency transceiver unit 18, 42 is permanently operating, whereas the operation of the microwave transceiver unit 17, 41 is only enabled from time to time, according to a predetermined time schedule and/or once the detection module 11 reaches predetermined locations along the pipeline.

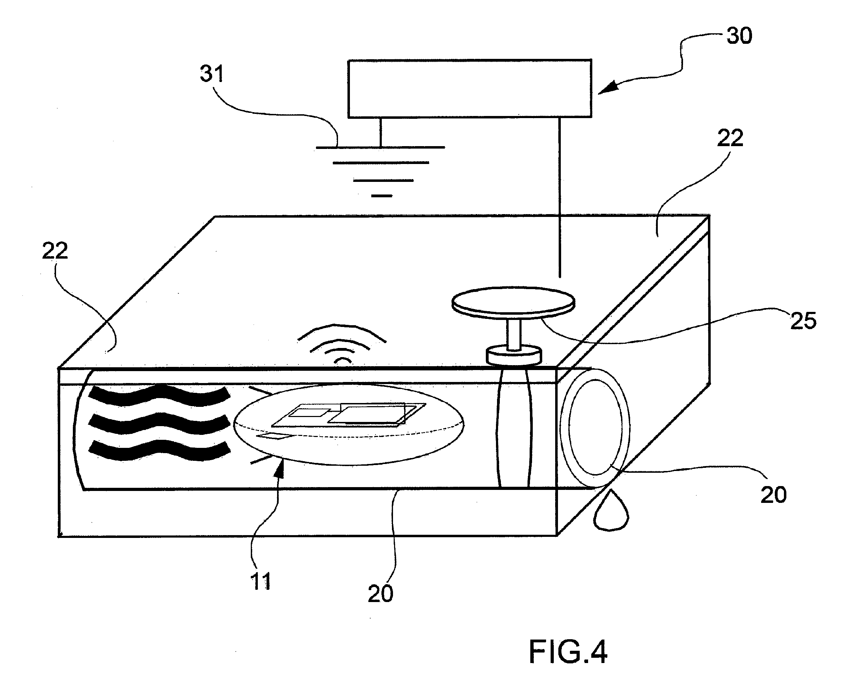

When the data or signals are being transmitted through a microwave link, it may prove convenient that said data be stored in the memories of the detection module 11, and transmitted through the microwave antenna arrangement 41 to a ground station 30 only when the detection module 11 passes in a predetermined position along the pipeline, for instance at a gate valve, such as that indicated 25 in figure 4, at which the detection module 11 is inevitably brought to a stop.

In general, the choice of the working frequencies of the wireless transmission between the detection module 11 and the associated ground station(s) 30 may depend upon the power consumption requirements, the nature and the electromagnetic propagation properties of the specific soil in which the pipeline is interred, and/or the nature of the material of the pipeline itself.

For instance, with a metal pipeline a wireless transmission at radiofrequencies is to be preferred, whereas with pipelines made of plastics a microwave wireless link can also be utilized.

By arranging the various circuits and devices of the detection module inside at least one metal case, preferably a mild steel tin, all said components and the associated power supply module are electromagnetically shielded with respect to the antenna arrangements. Furthermore, as tests performed by the inventors have shown, by arranging such metal case(s) within the loop or loops of the utilized antenna arrangement(s), the radiation patterns of said antenna arrangement(s) maintain a satisfactory omnidirectional behaviour, only marginally affected by the presence of said metal case(s).

The presence of a break and the corresponding leak, may be detected by suitably analyzing the acoustic signals provided by means of the sensing device 13. In particular, by taking the frequency domain transform of said acoustic signal, the presence of leaks corresponds to neatly detectable large variations of the acoustic spectrum which is otherwise essentially uniform. Such variations depend on the dimension and shape of the leak hole, as well as on the dimension of the pipe and the material used for its construction.

Figure 5 shows the general architecture of a system according to the invention as consisting of three main tiers.

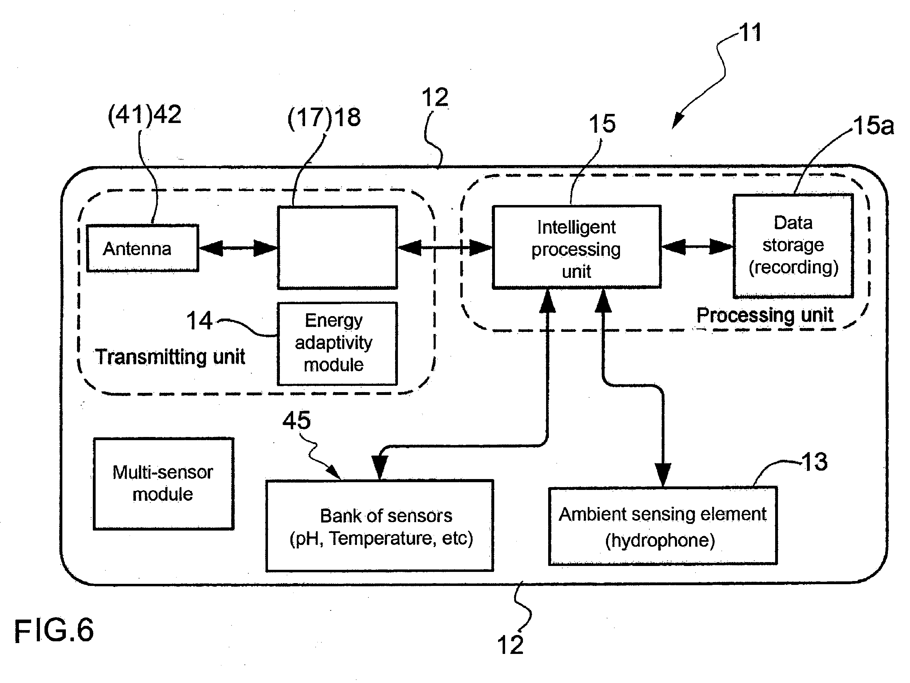

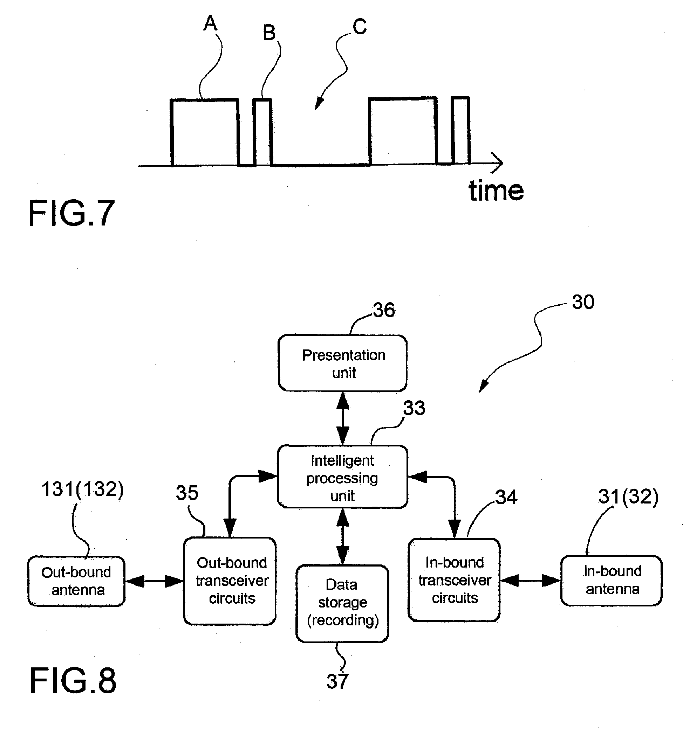

Tier 1 corresponds to the above-described detection module 11 and comprises the acoustic sensing device 13, the electronic processing and control unit 15, and the transceiver circuits 18 with the associated antenna(s) 41, 42. A more detailed description of the structure of tier 1 or the detection module 11 will be given later with reference to figure 6. Tier 2 is represented by one or more receiver/gateway stations or modules, corresponding to the ground stations 30 described above. Each such receiver/gateway modules comprises at least one in-bound antenna 31, 32 and one out-bound antenna 131, 132, and an electronic processing and routing unit 33. An exemplary structure of such a tier 2 unit will be given in the following with reference to figure 8.

Tier 3 of figure 5 is represented by at least one backend server unit 60 capable of aggregating data coming, though a wireless link, from several gateway units 30. Said backend server unit 60 applies signal processing techniques for the detection of leaks and for producing real-time information presented through an easy-to-use human machine interface (HMI).

The communications between tiers 1 and 2 can be performed in accordance with the IEEE 802.15.4 standard, implemented in both the transmitting and the receiving sections.

Tiers 2 and 3 can communicate using for instance the IEEE 802.11 standard. However other, even non-standardized, protocols can be used.

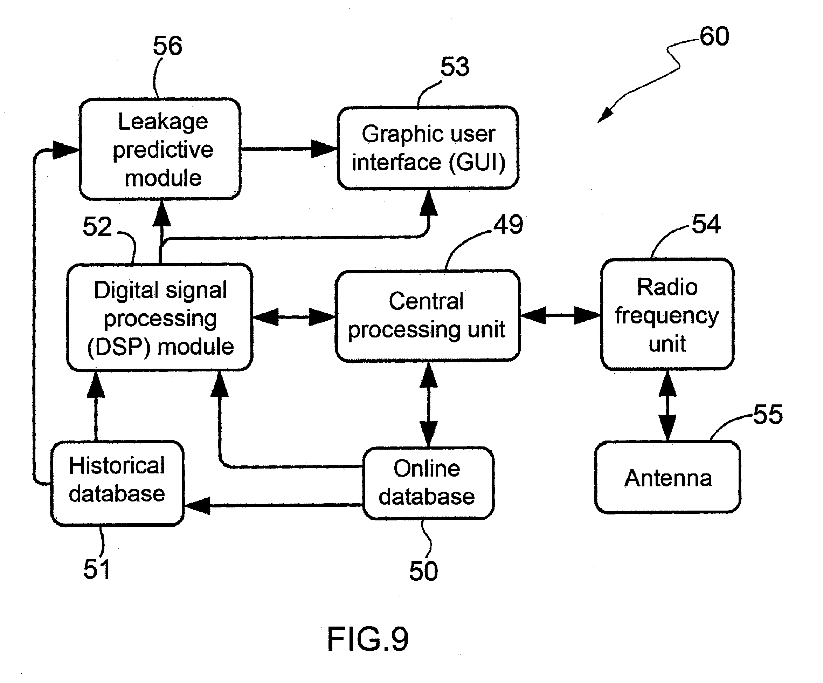

An exemplary structure of a backend server unit 60 for tier 3 is disclosed later with reference to figure 9.

Referring to figure 6, the (tier 1) detection module 11 is responsible for acoustically sensing the medium flowing in the pipelines 20, using for instance a sensing device such as a hydrophone, in accordance with a predetermined sensing cycle and sampling rate, both of which are preferably adaptively variable in a controlled manner. The sampled data are recorded in memories 15a, and are used for constructing the data packets that are transmitted to the gateway(s) 30 of tier 2. The processing unit of tier 1 includes thus an intelligent processing unit (microprocessor) 15 and associated memory devices 15a for data storage.

The data packets are sent to the gateway(s) 30 through the transmitting unit of tire 1, which consists of transceivers circuits 17 and/or 18 and the associated antenna arrangement 41 and/or 42. As already described above, the antenna arrangement is designed in such a way to enable wave propagation through the fluid, the wall of the pipeline, and the terrain up to the ground surface 22.

In order to improve the reliability of the transmitted data, a particular, innovative method can be used in handling said data. The time cycle of data transmission from the detection module 1 to the gateway(s) 30 of tier 2 is divided into three chunks, indicated A, B and C in the timeline graph of figure 7.

During period A the detection module 11 will continuously transmit raw data. During period B the detection module 11 will transmit statistics (for instance minimum value, maximum value, average value) of the already sent data. Finally, during period C detection module 11 will pass to a "sleep" or rest mode.

The above transmission mechanism provides redundancy to the system, and increases the reliability thereof, in case some packets which have been transmitted in period A get corrupted and/or lost.

Period C allows optimizing the power consumption. Both the A and C periods can be adaptively set.

In addition to this mechanism, the transmitting unit of the detection module 11 (figure 6) can be provided with an energy adaptability module 14, responsible for adapting the energy consumed by changing the power transmission levels.

Besides the ability of sensing leakages within underground pipelines, tier 1 can be implemented so as to provide different, further functions, by adding more sensors 45 thereto, such as a pH-sensor, a temperature sensor, etc., coupled to the processing unit 15.

In order to enhance the reliability of the system, it is possible to have two transmitters communicating with each other and with the gateway(s).

The data received by the gateway(s) can be used to localize leakages more precisely by using voting schemes.

As mentioned above, tier 2 represents the intermediate entity or entities between the detection module 11 and the backend server unit 60 of tier 3.

The main function of tier 2 is to receive data from the detection module, and forward it to the backend server 60. Advantageously, tier 2 is provided also with data-storing capability (data storage memory 37 in figure 8), that can be utilized for field access.

As already described, there are two main components in tier 2: the in-bound and the out-bound components. The in-bound component is composed of at least one antenna 31 and/or 32 and an associated in-bound transceiver unit 34, responsible for receiving data from the detection module 11 and for sending data to an intelligent processing unit 33 of tier 2. Said intelligent unit 33 controls both in-bound and out-bound wireless transmission units 34, 35. The out-bound component consists of a radio transceiver unit 35 and an antenna 131 (132), and operates for instance according to the IEEE 802.11 standard, and connects the gateway(s) 30 to the backend server unit 60.

One possible additional function of tier 2 is to show information about the "health" of the pipeline 20 under test by means of presentation unit 36 (figure 8). This function enables a field technician to identify the leakage location on site.

Tier 3 represents the main "brain" of the system. As shown in the block diagram of figure 9, tier 3 is represented by a backend server 60 provided with two data base storages: online database 50 and a historical database 51. Both databases 50 and 51 are used by a digital signal processing (DSP) module 52 in order to generate information data about the status of the pipeline 20. This information is presented by means of very flexible human-machine interface (HMI) or graphical user interface (GUI) 53, whereby the user can localize the leakage within the pipeline 20 under test. Said interface 53 can also be used to display information about the severity of the detected leakage. In addition, the interface 53 is adapted to allow the user to select (amongst a predetermined plurality) a preferred signal processing technique, which is particularly suitable for a specific pipeline under test.

The third tier, besides the ability of analyzing the current "health" of a pipeline 20 under test, may be provided with a module 56 capable of predicting, by means of suitable algorithms or models, possible futuristic leakages on the basis of the analysis of the historical data. The prediction results can also be displaced on the graphical user interface 53.

Finally, in figure 10 there is shown an example of a detection module 11, wherein use is made of a single antenna arrangement including one single loop 43, which is for instance a circular loop.

In the example shown in figure 10 parts and components which have been already described have been attributed again the same, previously used reference numerals.

In the example of figure 10, the metal case 19 enclosing the various circuits and components extends substantially through the central portion of the antenna loop 43, which in turn extends in a plane (x, y) transverse to the longitudinal major axis of the envelope 12.

In the example according to figure 10, the transceiver unit 18, 43 including the antenna loop 43 can operate for instance in the frequency band between 100 MHz and 700 MHz.

Also in the case of the example of figure 10, the radiation pattern of the antenna arrangement 43 confirms a satisfactorily omnidirectional behaviour, only marginally affected by the presence of the metal case (steel tin) 19.

The invention allows to achieve a remarkable improvement in the capability to transmit huge quantities of data via the wireless links.

Naturally, the principle of the invention remaining the same, the embodiments and details of construction can be widely varied with respect to what has been described and illustrated purely by way of a non-limitative example, without thereby departing from the scope of the invention as defined in the annexed claims.

The same system architectures disclosed above could be used in connection with (further) different sensing means, for instance with a camera, or other means for detecting physical parameters and providing corresponding information/data for transmission to the remote receiving station(s).

## Claims

1. A system for remote leak detection in a fluid transportation pipeline (20), comprising a detection module (11), adapted to be introduced into the pipeline (20) and comprising an outer envelope (12) within which there are provided
a sensing device (13) for generating detection signals representative in particular of sound waves detected in the pipeline (20);
at least one wireless transceiver unit (17, 41; 18, 42; 43) comprising transceiver circuits (37; 38); and
a signal processing and control unit (15) for processing the detection signals provided by the sensing device (13) and controlling the transmission of corresponding communication signals through said at least one wireless transceiver unit (17, 41; 18, 42; 43) according to a predetermined protocol;
the detection module (11) comprising further an antenna arrangement (41; 42; 43) comprising at least one loop or frame (41 a, 41 b; 42a, 42b; 43);
the system comprising further at least one remote receiving station (30) adapted to receive the communication signals transmitted by said at least one wireless transceiver unit (17, 41; 18, 42; 43) of the detection module (11);
the system being **characterized in that** the detection module (11) is a module adapted to be conveyed by the fluid flow (F) in the pipeline (20), **in that** the antenna arrangement (41; 42; 43) is provided within said envelope (12) which is transparent to electromagnetic waves, and **in that** said at least one wireless transceiver unit includes at least one microwave transceiver unit (17) and at least one radio-frequency transceiver unit (18) operating at a relatively lower frequency; said microwave transceiver unit (17) including a microwave transceiver circuit (17) and an associate microwave magnetic loop antenna arrangement (41) comprising two orthogonal loops or frames (41a, 41b), and said radio-frequency transceiver unit (18) includes a radiofrequency transceiver circuit (18) and an associated radiofrequency loop antenna arrangement (42) comprising two mutually orthogonal loops or frames (42a, 42b).

2. A system according to claim 1 wherein said signal processing and control unit (15) and said transceiver circuits (17; 18) are arranged within at least one metal case (19) mounted inside said envelope (12), said at least one antenna loop or frame (41a, 41b; 42a, 42b; 43) extending around the metal case (19) in an intermediate transverse plane thereof.

3. A system according to claim 2 wherein said metal case (19) extends substantially through the central portion of said at least one antenna loop or frame (41a, 41b; 42a, 42b; 43).

4. A system according to any of claims 1-3, wherein said at least one antenna arrangement comprises a circular loop antenna (43).

5. A system according to any of the preceding claims, wherein the envelope (12) of said detection module (11) has an elongate shape, preferably of a solid of revolution, in particular an ellipsoid.

6. A system according to any of the preceding claims, wherein the envelope (12) of the said detection module (11) is provided with stabilizing means (12c) adapted to hinder a rotation thereof about the axis of said module (11) which in use is essentially parallel to the direction (24) of the fluid flow (F) in the pipeline (20).

7. A system according to any of the preceding claims, wherein said signal processing and control unit (15) of the detection module (11) has associated memory means (15a) capable of storing signals or data provided by said sensing device (13), and is predisposed to cause transmission of the stored signals or data to at least one remote receiving station (30) placed at a predetermined position (25) along the path of the pipeline (20).

8. A system according to any of the preceding claims, wherein the detection module (11) includes further at least one sensor (45) for providing said signal processing and control unit (15) with signals indicative of the value of a corresponding monitored parameter, such as the pH of the liquid flowing in the pipeline (20) and/or the temperature thereof.

9. A system according to any of the preceding claims, wherein the detection module (11) includes an energy supply module (14) capable of adaptively adjusting the power supply to devices and circuits of said detection module (11).

10. A system according to any of the preceding claims, wherein said signal processing and control unit (15) of the detection module (11) is predisposed for controlling said at least one wireless transceiver unit (17, 41; 18, 42; 43) according to a predetermined transmission time cycle comprising a first period (A) in which said wireless transceiver unit is enabled to continuously transmit data, a second period (B) in which said wireless transceiver unit is caused to transmit predetermined statistics of the data sent in said first period (A), and a third rest or sleep period (C) in which said wireless transceiver unit is disabled.

11. A system according to any of the preceding claims, comprising further at least one remote backend station (60) adapted to receive via a wireless link data or signals transmitted by said at least one remote receiving station (30).

12. A system according to claim 11, wherein said at least one remote receiving station (30) is adapted to operate as a gateway between the detection module (11) and said at least one backend station (60) and includes
a processing unit (33),
an in-bound unit, comprising in-bound transceiver circuits (34) and an associated in-bound antenna (31; 32), for receiving signals or data from the detection module (11) and forwarding corresponding signals to said processing unit (33);
an out-bound unit, comprising out-bound transceiver circuits (35) and an associated out-bound antenna (131; 132) for coupling said processing unit (33) with said at least one backend server station (60).

13. A system according to claim 12; wherein said processing unit (33) is coupled to a presentation unit (36) for local display of information for field access.

14. A system according to any of claims 11-13, wherein said backend server station (60) comprises a central processing unit (49) with an associated online database (50) and a historical database (51); the backend server station (60) comprising further a digital signal processing module (52) predisposed for generating status information concerning the status of the pipeline (20) on the basis of the data stored in said data-bases (50; 51).

15. A system according to claim 14, wherein said central processing unit (49) is coupled to a wireless transceiver unit (54) having an associated antenna (55).

16. A system according to claim 14 or 15, wherein said backend server station (60) includes a leakage predictive module (56), coupled to said historical database (51) and to said digital signal processing module (52), and predisposed to generate, in accordance with predetermined algorithms and/or models, predictions of possible future leakages in the pipeline (20).

17. A system according to any of claims 11 to 16, wherein said backend server station (60) includes further a graphical user interface (53) for the presentation of information concerning possible leakages, their location and severity.

## Patentansprüche

1. Ein System für eine Fern-Leck-Erfassung bei einer Fluidtransportpipeline (20), das ein Erfassungsmodul (11) aufweist, das angepasst ist, um in die Pipeline (20) eingebaut zu sein, und eine Außenumhüllung (12) aufweist, innerhalb derer folgendes vorgesehen ist:
eine Erfassungsvorrichtung (13) zum Erzeugen von Erfassungssignalen, die insbesondere Schallwellen darstellen, die in der Pipeline (20) erfasst werden;
zumindest eine drahtlose Sende-Empfangs-Einheit (17, 41; 18, 42; 43), die Sende-Empfangs-Schaltungen (37; 38) aufweist; und
eine Signalverarbeitungs- und Steuer-Einheit (15) zum Verarbeiten der Erfassungssignale, die durch die Erfassungsvorrichtung (13) bereitgestellt werden, und Steuern der Übertragung von entsprechenden Kommunikationssignalen durch die zumindest eine drahtlose Sende-Empfangs-Einheit (17, 41; 18, 42; 43) gemäß einem vorbestimmten Protokoll;
wobei das Erfassungsmodul (11) ferner eine Antennenanordnung (41; 42; 43) aufweist, die zumindest eine Schleife oder einen Rahmen (41a, 41b; 42a, 42b; 43) aufweist;
wobei das System ferner zumindest eine Fern-Empfangsstation (30) aufweist, die angepasst ist, um die Kommunikationssignale zu empfangen, die durch die zumindest eine drahtlose Sende-Empfangs-Einheit (17, 41; 18, 42; 43) des Erfassungsmoduls (11) übertragen werden;
wobei das System **dadurch gekennzeichnet ist, dass** das Erfassungsmodul (11) ein Modul ist, das angepasst ist, um durch den Fluidfluss (F) in der Pipeline (20) befördert zu werden, dadurch, dass die Antennenanordnung (41; 42; 43) innerhalb der Umhüllung (12) bereitgestellt ist, die transparent für elektromagnetische Wellen ist, und dadurch, dass die zumindest eine drahtlose Sende-Empfangs-Einheit zumindest eine Mikrowellen-Sende-Empfangs-Einheit (17) und zumindest eine Hochfrequenz-Sende-Empfangs-Einheit (18) umfasst, die bei einer relativ gesehen niedrigeren Frequenz arbeiten;
wobei die Mikrowellen-Sende-Empfangs-Einheit (17) eine Mikrowellen-Sende-Empfangs-Schaltung (17) und eine zugeordnete Mikrowellen-Magnet-Schleifenantennen-Anordnung (41) aufweist, die zwei orthogonale Schleifen oder Rahmen (41 a, 41 b) aufweist, und die Hochfrequenz-Sende-Empfangs-Einheit (18) eine Hochfrequenz-Sende-Empfangs-Schaltung (18) und eine zugeordnete Hochfrequenz-Schleifenantennen-Anordnung (42) umfasst, die zwei zueinander orthogonale Schleifen oder Rahmen (42a, 42b) aufweist.

2. Ein System gemäß Anspruch 1, bei dem die Signalverarbeitungs- und Steuer-Einheit (15) und die Sende-Empfangs-Schaltungen (17; 18) innerhalb von zumindest einem Metallgehäuse (19) angeordnet sind, das innerhalb der Umhüllung (12) befestigt ist, wobei die zumindest eine Antennenschleife oder der Rahmen (41 a, 41b; 42a, 42b; 43) sich um das Metallgehäuse (19) in einer Zwischen-Quer-Ebene desselben erstrecken.

3. Ein System gemäß Anspruch 2, bei dem das Metallgehäuse (19) sich im Wesentlichen durch den Mittelabschnitt der zumindest einen Antennenschleife oder des Rahmens (41 a, 41b; 42a, 42b; 43) erstreckt.

4. Ein System gemäß einem der Ansprüche 1 bis 3, bei dem die zumindest eine Antennenanordnung eine kreisförmige Schleifenantenne (43) aufweist.

5. Ein System gemäß einem der vorangehenden Ansprüche, bei dem die Umhüllung (12) des Erfassungsmoduls (11) eine längliche Form aufweist, vorzugsweise die eines Rotationskörpers, insbesondere eines Ellipsoids.

6. Ein System gemäß einem der vorangehenden Ansprüche, bei dem die Umhüllung (12) des Erfassungsmoduls (11) mit einer Stabilisierungseinrichtung (12c) bereitgestellt ist, die angepasst ist, um eine Drehung desselben um die Achse des Moduls (11) zu verhindern, das in Verwendung im Wesentlichen parallel zu der Richtung (24) des Fluidflusses (F) in der Pipeline (20) ist.

7. Ein System gemäß einem der vorangehenden Ansprüche, bei dem die Signalverarbeitungs- und Steuer-Einheit (15) des Erfassungsmoduls (11) eine zugeordnete Speichereinrichtung (15a) aufweist, die in der Lage ist, Signale oder Daten zu speichern, die durch die Erfassungsvorrichtung (13) bereitgestellt werden, und prädisponiert ist, um die Übertragung der gespeicherten Signale oder Daten zu zumindest einer Fern-Empfangsstation (30) zu verursachen, die an einer vorbestimmten Position (25) entlang dem Weg der Pipeline (20) platziert ist.

8. Ein System gemäß einem der vorangehenden Ansprüche, bei dem das Erfassungsmodul (11) ferner zumindest einen Sensor (45) zum Beliefern der Signalverarbeitungs- und Steuer-Einheit (15) mit Signalen umfasst, die den Wert eines entsprechenden überwachten Parameters anzeigen, wie z. B. den pH-Wert der Flüssigkeit, die in der Pipeline (20) fließt, und/oder die Temperatur derselben.

9. Ein System gemäß einem der vorangehenden Ansprüche, bei dem das Erfassungsmodul (11) ein Energieversorgungsmodul (14) umfasst, das in der Lage ist, die Leistungsversorgung zu Vorrichtungen und Schaltungen des Erfassungsmoduls (11) adaptiv einzustellen.

10. Ein System gemäß einem der vorangehenden Ansprüche, bei dem die Signalverarbeitungs- und Steuer-Einheit (15) des Erfassungsmoduls (11) prädisponiert ist zum Steuern der zumindest einen drahtlosen Sende-Empfangs-Einheit (17, 41; 18, 42; 43) gemäß einem vorbestimmten Übertragungszeitzyklus, der eine erste Periode (A), in der die drahtlose Sende-Empfangs-Einheit in der Lage ist, kontinuierlich Daten zu übertragen, eine zweite Periode (B), in der die drahtlose Sende-Empfangs-Einheit veranlasst wird, vorbestimmte Statistiken der Daten zu übertragen, die in der ersten Periode (A) gesendet werden, und eine dritte Ruhe- oder Schlaf-Periode (C), in der die drahtlose Sende-Empfangs-Einheit deaktiviert ist, aufweist.

11. Ein System gemäß einem der vorangehenden Ansprüche, das ferner zumindest eine entfernte ausgangsseitige Station (60) aufweist, die angepasst ist, um über eine drahtlose Verknüpfung Daten oder Signale zu empfangen, die durch die zumindest eine Fern-Empfangsstation (30) übertragen werden.

12. Ein System gemäß Anspruch 11, bei dem die zumindest eine Fern-Empfangsstation (30) angepasst ist, um als Gateway zwischen dem Erfassungsmodul (11) und der zumindest einen ausgangsseitigen Station (60) zu wirken und folgendes umfasst:
eine Verarbeitungseinheit (33),
eine hineinführende Einheit, die hineinführende Sende-Empfangs-Schaltungen (34) und eine zugeordnete hineinführende Antenne (31; 32) aufweist, zum Empfangen von Signalen oder Daten von dem Erfassungsmodul (11) und Weiterleiten entsprechender Signale zu der Verarbeitungseinheit (33);
eine herausführende Einheit, die herausführende Sende-Empfangs-Schaltungen (35) und eine zugeordnete herausführende Antenne (131; 132) zum Koppeln der Verarbeitungseinheit (33) mit der zumindest einen ausgangsseitigen Serverstation (60) aufweist.

13. Ein System gemäß Anspruch 12, bei dem die Verarbeitungseinheit (33) mit einer Präsentationseinheit (36) für eine lokale Anzeige von Informationen für einen Feldzugriff gekoppelt ist.

14. Ein System gemäß einem der Ansprüche 11 bis 13, bei dem die ausgangsseitige Serverstation (60) eine zentrale Verarbeitungseinheit (49) mit einer zugeordneten Onlinedatenbank (50) und einer historischen Datenbank (51) aufweist; wobei die ausgangsseitige Serverstation (60) ferner ein Digitalsignal-Verarbeitungsmodul (52) aufweist, das prädisponiert ist zum Erzeugen von Statusinformationen betreffend den Status der Pipeline (20) auf der Basis der Daten, die in den Datenbanken (50; 51) gespeichert sind.

15. Ein System gemäß Anspruch 14, bei dem die zentrale Verarbeitungseinheit (49) mit einer drahtlosen Sende-Empfangs-Einheit (54) gekoppelt ist, die eine zugeordnete Antenne (55) aufweist.

16. Ein System gemäß Anspruch 14 oder 15, bei dem die ausgangsseitige Serverstation (60) ein ein Leck vorhersagendes Modul (56) umfasst, das mit der historischen Datenbank (51) und mit dem Digitalsignalverarbeitungsmodul (52) gekoppelt ist und prädisponiert ist, um gemäß vorbestimmten Algorithmen und/oder Modellen Vorhersagen von möglichen zukünftigen Lecken in der Pipeline (20) zu erzeugen.

17. Ein System gemäß einem der Ansprüche 11 bis 16, bei dem die ausgangsseitige Serverstation (60) ferner eine graphische Benutzerschnittstelle (53) für die Präsentation von Informationen betreffend mögliche Lecks, deren Ort und deren Ernsthaftigkeit umfasst.

## Revendications

1. Système de détection de fuites à distance dans une conduite de transport de fluides (20), comprenant un module de détection (11), adapté pour être introduit dans la conduite (20) et comprenant une enveloppe extérieure (12) dans laquelle sont placés
un dispositif de détection (13) pour produire des signaux de détection représentatifs en particulier d'ondes sonores détectées dans la conduite (20) ;
au moins une unité d'émetteur-récepteur sans fil (17, 41 ; 18, 42 ; 43) comprenant des circuits d'émetteur-récepteur (37 ; 38) ; et
une unité de commande et de traitement du signal (15) pour traiter les signaux de détection fournis par le dispositif de détection (13) et commander la transmission de signaux de communication correspondants par l'intermédiaire de ladite au moins une unité d'émetteur-récepteur sans fil (17, 41 ; 18, 42 ; 43) selon un protocole prédéterminé ;
le module de détection (11) comprenant en outre un agencement d'antenne (41 ; 42 ; 43) comprenant au moins une boucle ou cadre (41a, 41b ; 42a, 42b ; 43) ;
le système comprenant en outre au moins une station réceptrice distante (30) adaptée pour recevoir les signaux de communication transmis par ladite au moins une unité d'émetteur-récepteur sans fil (17, 41 ; 18, 42 ; 43) du module de détection (11) ;
le système étant **caractérisé en ce que** le module de détection (11) est un module adapté pour être transporté par l'écoulement de fluide (F) dans la conduite (20), **en ce que** l'agencement d'antenne (41 ; 42 ; 43) est placé à l'intérieur de ladite enveloppe (12) qui est transparente aux ondes électromagnétiques, et **en ce que** ladite au moins une unité d'émetteur-récepteur sans fil comprend au moins une unité d'émetteur-récepteur en hyperfréquence (17) et au moins une unité d'émetteur-récepteur en radiofréquence (18) fonctionnant à une fréquence relativement inférieure ; ladite unité d'émetteur-récepteur en hyperfréquence (17) comprenant un circuit émetteur-récepteur en hyperfréquence (17) et un agencement d'antenne à boucle magnétique hyperfréquence associé (41) comprenant deux boucles ou cadres orthogonales (41a, 41b), et ladite unité d'émetteur-récepteur en radiofréquence (18) comprend un circuit émetteur-récepteur en radiofréquence (18) et un agencement d'antenne à boucle radiofréquence associé (42) comprenant deux boucles ou cadres mutuellement orthogonales (42a, 42b).

2. Système selon la revendication 1, dans lequel ladite unité de commande et de traitement du signal (15) et lesdits circuits émetteurs-récepteurs (17; 18) sont placés à l'intérieur d'au moins un boîtier métallique (19) monté à l'intérieur de ladite enveloppe (12), ladite au moins une boucle ou cadre d'antenne (41a, 41b ; 42a, 42b ; 43) s'étendant autour du boîtier métallique (19) dans un plan transversal intermédiaire de celui-ci.

3. Système selon la revendication 2, dans lequel ledit boîtier métallique (19) s'étend substantiellement à travers la partie centrale de ladite au moins une boucle ou cadre d'antenne (41a, 41b ; 42a, 42b ; 43).

4. Système selon l'une quelconque des revendications 1 à 3, dans lequel ledit au moins un agencement d'antenne comprend une antenne à boucle circulaire (43).

5. Système selon l'une quelconque des revendications précédentes, dans lequel l'enveloppe (12) dudit module de détection (11) a une forme allongée, de préférence la forme d'un solide de révolution, en particulier d'un ellipsoïde.

6. Système selon l'une quelconque des revendications précédentes, dans lequel l'enveloppe (12) dudit module de détection (11) est pourvue d'un moyen de stabilisation (12c) adapté pour entraver une rotation de celui-ci autour de l'axe dudit module (11) qui, en utilisation, est essentiellement parallèle à la direction (24) de l'écoulement de fluide (F) dans la conduite (20).

7. Système selon l'une quelconque des revendications précédentes, dans lequel ladite unité de commande et de traitement du signal (15) du module de détection (11) a un moyen de mémoire associé (15a) capable de stocker des signaux ou des données fournis par ledit dispositif de détection (13), et est prévue pour provoquer la transmission des signaux ou données stockés vers au moins une station réceptrice distante (30) placée en une position prédéterminée (25) le long du parcours de la conduite (20).

8. Système selon l'une quelconque des revendications précédentes, dans lequel le module de détection (11) comprend en outre au moins un capteur (45) pour fournir à ladite unité de commande et de traitement du signal (15) des signaux indiquant la valeur d'un paramètre surveillé correspondant, comme le pH du liquide circulant dans la conduite (20) et/ou sa température.

9. Système selon l'une quelconque des revendications précédentes, dans lequel le module de détection (11) comprend un module de fourniture d'énergie (14) apte à ajuster de façon adaptative l'alimentation électrique des appareils et circuits dudit module de détection (11).

10. Système selon l'une quelconque des revendications précédentes, dans lequel ladite unité de commande et de traitement du signal (15) du module de détection (11) est prévue pour commander ladite au moins une unité d'émetteur-récepteur sans fil (17, 41 ; 18, 42 ; 43) selon un cycle de temps de transmission prédéterminé comprenant une première période (A) dans laquelle ladite unité d'émetteur-récepteur sans fil est activée pour transmettre en continu des données, une deuxième période (B) dans laquelle on fait transmettre par ladite unité d'émetteur-récepteur sans fil une statistique prédéterminée des données envoyées dans ladite première période (A), et une troisième période de repos ou veille (C) dans laquelle ladite unité d'émetteur-récepteur sans fil est désactivée.

11. Système selon l'une quelconque des revendications précédentes, comprenant en outre au moins une station de soutien distante (60) adaptée pour recevoir par l'intermédiaire d'une liaison sans fil des données ou des signaux transmis par ladite au moins une station réceptrice distante (30).

12. Système selon la revendication 11, dans lequel ladite au moins une station réceptrice distante (30) est adaptée pour fonctionner en tant que passerelle entre le module de détection (11) et ladite au moins une station de soutien (60) et comprend :
une unité de traitement (33),
une unité d'entrée, comprenant des circuits émetteurs-récepteurs d'entrée (34) et une antenne d'entrée associée (31 ; 32) pour recevoir des signaux ou des données provenant du module de détection (11) et transmettre des signaux correspondants à ladite unité de traitement (33) ;
une unité de sortie, comprenant des circuits émetteurs-récepteurs de sortie (35) et une antenne de sortie associée (131 ; 132) pour coupler ladite unité de traitement (33) à ladite au moins une station de serveur de soutien (60).

13. Système selon la revendication 12, dans lequel ladite unité de traitement (33) est couplée à une unité de présentation (36) pour l'affichage local d'informations pour l'accès de champ.

14. Système selon l'une quelconque des revendications 11 à 13, dans lequel ladite station de serveur de soutien (60) comprend une unité centrale de traitement (49) avec une base de données en ligne associée (50) et une base de données historique (51) ; la station de serveur de soutien (60) comprenant en outre un module de traitement du signal numérique (52) prévu pour produire une information d'état concernant l'état de la conduite (20) d'après les données stockées dans lesdites bases de données (50 ; 51).

15. Système selon la revendication 14, dans lequel ladite unité centrale de traitement (49) est couplée à une unité d'émetteur-récepteur sans fil (54) ayant une antenne associée (55).

16. Système selon la revendication 14 ou 15, dans lequel ladite station de serveur de soutien (60) comprend un module prédictif de fuite (56), couplé à ladite base de données historique (51) et audit module de traitement du signal numérique (52), et prévu pour produire, selon des algorithmes et/ou modèles prédéterminés, des prévisions de possibles fuites futures dans la conduite (20).

17. Système selon l'une quelconque des revendications 11 à 16, dans lequel ladite station de serveur de soutien (60) comprend en outre une interface utilisateur graphique (53) pour la présentation d'informations concernant des fuites possibles, leur emplacement et leur sévérité.
